Europäisches Patentamt

European Patent Office

Office européen des brevets

(19)

(11) Publication number: **0 089 826**
**A2**

(12) # EUROPEAN PATENT APPLICATION

(21) Application number: **83301513.4**

(22) Date of filing: **18.03.83**

(51) Int. Cl.³: **G 01 N 33/54**

(30) Priority: **19.03.82 US 360118**

(43) Date of publication of application:
**28.09.83 Bulletin 83/39**

(84) Designated Contracting States:
**BE DE FR GB IT NL**

(71) Applicant: **ORTHO DIAGNOSTIC SYSTEMS INC.**
**501 George Street**
**New Brunswick New Jersey 08903(US)**

(72) Inventor: **Hoffman, Robert A.**
**130 Balcom Street**
**Mansfield, Ma. 02048(US)**

(72) Inventor: **Hansen, W. P.**
**86 Cedar Street**
**Middleboro, Ma. 02346(US)**

(74) Representative: **Jones, Alan John et al,**
**CARPMAELS & RANSFORD 43 Bloomsbury Square**
**London, WC1A 2RA(GB)**

(54) **Method of enumerating serologically selected cell populations.**

(57) Methods for enumerating cell populations serologically selected from a heterogenous population by contacting the cells with specific antibodies absorbed onto a solid surface, staining the bound cells with a nucleic acid specific fluorescent stain and appropriately illuminating the cells whereupon bulk fluorescence may be detected and the number of cells calculated therefrom.

EP 0 089 826 A2

## METHOD OF ENUMERATING SEROLOGICALLY SELECTED CELL POPULATIONS

### Field of the Invention

This invention relates to a method for enumerating the number of cells comprising a population that has been specifically selected from a heterogeneous population by serological reaction.

### Background of the Invention

Numerous clinical and research activities require the isolation and enumeration of specified cell types from heterogenous populations. Typically, it has been found that cells may be selected by employing serological type reactions utilizing specific antigen-antibody reactivities. Ideally, the cells to be isolated will have on their surface an antigen uncommon to surrounding cell types. These antigens are then used by techniques well known to produce antibodies that can specifically react with these antigens. The antibodies are then commonly attached to a solid substrate such as the surface of a petri dish or the surface of glass beads or other microparticles and the heterogeneous cell population contacted therewith under conditions appropriate for the stimulation of a serological reaction. The desired cells are thereby attached to the solid surface and the remaining cells may be removed by a typical washing step. If the cells are bound to a flat surface, they may be counted utilizing a standard microscope, however, such an operation would be very tedious and therefore prone to error. Further, it has been shown that this type of counting procedure often fails to provide repeatable results.

The manual counting method may be automated by detecting light pulses due to scattering, fluorescence, absorption and the like when a scanning light beam illuminates a cell bound to the surface. Such scanning devices, the so called flying spot scanners, tend to be rather complex and expensive. For example, U.S. Patent 3,715,601 to Tucker describes how such a flying spot scanner may be employed and the complex signal handling techniques required.

It is an object of the present invention to provide a method for enumerating these serologically specified cells by employing automated technology which does not rely on expensive complicated devices such as the flying spot scanners.

In an effort to distinguish cell types, fluorescent staining techniques have been combined with automated spot scanners. For example, U.S. Patent No. 4,094,745 to Scholefield describes a method suitable for application either with a flying spot scanner or with manual microscopic counting techniques. Scholefield discloses a method for estimating the extent of microbial contamination in food stuffs or in raw materials used in the production of food stuffs. The method requires treating the microorganisms with an aqueous solution of phosphate and reacting the treated microorganisms with a fluorescent dye. Apparently the dye combines with the microorganisms via intermediate phosphate linkages. Enumeration of the microorganisms is then accomplished by applying a known volume of the sample to a known area of a carrier plate and then employing the standard colony count technique for determining the number of microorganisms. A viable/ nonviable determination may be made based upon the differences in fluorescing wavelengths. Scholefield's methods, however, fail to describe how specified cell populations may be enumerated without relying on liquid medium suspensions or treatment with phosphate ions.

RI-34

It is an object of the present invention to provide a method whereby an automated method may be used for the enumeration of a specified cell population found within a heterogenous sample mixture without relying on phosphate treatments.

Attachment of cells or other particles to a solid substrate by a serological reaction has generally required the subsequent attachment of a probe, again by serological reaction, for the detection of the particle. For instance, U.S. Patent No. 4,011,308 to Giaever teaches the use of an indirect labeling technique for determining the presence of particles to be detected. Specifically, an immunologically reactive biological particle such as an antibody is adsorbed onto the surface of a substrate in a particular layer pattern. The coated substrate is then exposed to the sample solution and subsequently to non-adsorbed labeled antibodies also specific for the particle to be detected. Thus, Giaever relies on the conventional sandwich type technique for adsorbing and labeling a specific particle. The pattern substrate surface may be monitored for the presence of the tags or labels by searching with an appropriate instrument for sensing the particular pattern. Thus, Giaever teaches a method for determining the presence or absence of select particles but does not provide a method for enumeration of the particles.

A similar procedure employing polymeric particles as the solid substrate is described by Monthony, et al. in U.S. Patent No. 4,254,096. The methods described therein teach a technique for the determination of the presence of an antigen by reacting the antigen with a specific antibody bound on polymeric particles and subsequently reacting the bound particles with a labeled antibody specific for the antigen to form the sandwich type reaction complex. The particles are then physically separated from

ORI-34

the solutions and analyzed by direct optical spectroscopy. The selection of the polymeric particle sizes is apparently important for the creation of a substantially homogenous suspension. Such a technique provides a method for determining the concentration of an unknown immune reactant but fails to provide a method whereby a specified cell population may be enumerated.

It is an object of the present invention to overcome such deficiency without relying on either expensive flying spot scanner type automated instrumentation or sandwich type immunoassay techniques.

Other techniques for distinguishing between cell types have relied on fluorescent staining techniques such as that described in U.S. Patent 3,684,377 to Adams et al. Specifically, the Adams et al. reference teaches the use of acridine orange as a nuclear stain for distinguishing between different types of leukocytes in an aqueous sample based upon differing fluorescent response to laser type illumination. The techniques and procedures taught are, however, limited to suspended cells which have not been attached to a substrate and consequently are particularly suitable for flow cytometry instrumentation. In fact, acridine orange may be successfully used in monitoring DNA and RNA as a means for assessing cellular changes as a result of drug or cancer induced variations. (Melamed, M.R., Darzynkiewicz, Z., Traganos, F., and Sharpless, T., Cytology Automation by Flow Cytometry, Cancer Research 37:2806-2812, 1977.) Cellular DNA staining by acridine orange and other dyes has been described in Flow Cytometry and Sorting (Wiley & Sons, Inc., 1979), specifically in Chapters 14, Techniques for Quantitative Staining of Cellular DNA for Flow Cytometric Analysis by H.A. Crissman et al. and 16, Acridine Orange as a Molecular Probe in Studies of Nucleic Acids in Situ by Z. Darzynkiewicz.

T-34

These reported staining techniques, however, are not helpful for enumerating specific cell types in a heterogeneous population adsorbed onto solid substrates.

It is an object of the present invention to overcome the deficiencies encompassed in the conventional techniques and provide a method for enumerating cell populations that are serologically selected. It is another object of the present invention to provide methods that employ automated instrumentation without relying on the relatively more expensive and complicated flying spot scanner type techniques.

## Summary of the Invention

In accordance with the objects and principles of the present invention, there are provided methods for enumerating a serologically selected cell population which rely on the principle that nucleic acids in cells may be specifically stained with a fluorochrome and that when illuminated, measurement of the resulting bulk fluorescence will be proportional to the amount of nucleic acid, specifically deoxyribose nucleic acid (DNA) present within the cell. Since DNA is reasonably constant in most non-replicating cells, typically comprising the majority of any cell population examined, the amount of DNA is proportional to the number of cells. Therefore, simple measurement of bulk fluorescence can be, with proper calibration, related to the number of cells that are stained. Since stains specific for nucleic acid are typically not cell type specific, the desired cells are identified and selected in accordance with serological techniques. Thus, the adsorption of a cell specific antibody onto a solid substrate will bind the cell to the exclusion of other cells for which the antibody is not specific. Therefore, with appropriate calibration, the subsequent staining with an

I-34

appropriate fluorescent dye, illumination and measurement will permit calculation of the number of serologically specified cells.

## Best Mode For Carrying Out the Invention

The present invention relies, in part, on the capability to stain nucleic acids within cells with a fluorochrome. Preferably, such a nucleic acid stain will be specific for DNA which will typically be found in a more consistent concentration on a cell by cell basis than RNA (ribose-nucleic acid). Consequently, one may employ a dye such as acridine orange in a non-equilibrium condition in order to effectuate a reasonably complete staining of cellular DNA.

Often, the use of such a dye such as acridine orange and the like may require a washing step in order to eliminate background fluorescence which might otherwise contribute to an unreasonably high noise to signal ratio. Such a problem may preferably be avoided by employing a fluorescent dye such as 4'-6-Diamidino-2-phylindole (DAPI) available from Polysciences, Warrington, Pennsylvania, which fluoresces only when bound to DNA. Thus, what becomes an extraneous washing step may be advantageously avoided while providing a larger signal to noise ratio and hence greater accuracy. Illumination of cells stained with a nucleic acid specific fluorochrome and detection of the resulting fluorescence provides a light intensity signal which is proportional to the amount of DNA. Based on the observation that DNA is fairly constant in most non-replicating cells, it may be deduced that the amount of DNA is normally proportional to the number of cells. Thus, the amount of fluorescence may be directly correlated to the number of cells present.

ORI-34

## Example

The number of thymus differentiated lymphocytes or T-cells circulating in whole blood is often used as diagnostic criteria for several types of diseases. Consequently, the enumeration of the number of T-cells in contrast to non-thymus differentiated cells provides valuable data for clinical diagnosis. Such an enumeration may be carried out as follows: an aliquot of a known number of leucotyes (white blood cells which includes the subclass of T cells) are applied to a solid surface having adsorbed thereto antibody against T cell antigen such as OKT1™, OKT3™, or OKT11a™ obtainable from Ortho Diagnostic Systems Inc., Route 202, Raritan, New Jersey. Such a surface would preferably be the bottom of a petri dish or a microtitre well or the like. After an adequate incubation time under conditions appropriate for a serological reaction, the unbound cells are washed off and a fluorochrome such as acridine orange or DAPI is added to the cells bound to the surface. Again, conditions are adjusted so as to result in the appropriate environment for the desired staining. Unbound dye is washed off if necessary (unnecessary with DAPI) and the surface is epi-illuminated with light having a wavelength selected in accordance with the selected fluorochrome to stimulate fluorescence. The fluorescence is then detected via conventional photomultiplier type detectors to provide a signal that is proportional to the amount of DNA present and hence the number of cells bound. Proper calibration will result in the ability to determine the fraction of cells in the initial aliquot which are bound to the surface.

It is to be further understood that many other alternatives such as fluorescent stain antibody combinations will occur to those skilled in the art without departing from the spirit or scope of the invention.

[-34

CLAIMS:

1. A method for enumerating a serologically selected cell population comprising the steps of:

a) providing a solid substrate having coated thereon antibody specific for the cells to be selected and enumerated;

b) applying a sample, from which the desired cells are to be selected and enumerated, to the solid substrate under conditions appropriate for a serological reaction between the antibody and the cells;

c) removing unbound cells;

d) staining bound cells with a nucleic acid specific fluorescent stain under appropriate conditions;

e) illuminating the stained cells with light wavelengths whereby the fluorescent stain fluoresces; and

f) detecting fluorescence from stained nucleic acid and calculating therefrom the number of cells stained.

2. The method as provided in claim 1 wherein the nucleic acid stain is deoxyribose nucleic acid specific and the fluorescence detected is proportional to the amount of bound fluorescent stain.

3. The method as provided in claim 2 wherein the deoxyribose nucleic acid specific stain is selected from the group consisting of acridine orange and DAPI.

RI-34

4. The method as provided in claims 1, 2 or 3 wherein the cell populations to be serologically detected and enumerated are thymus differentiated white blood cells, and the sample comprises a known number of white blood cells, and the antibody coating the solid substrate is selected from the group consisting of antibody specific against thymus cell antigen, OKT1™, OKT3™ and OKT11a™.

5. The method as provided in claim 1, 2, 3, or 4 wherein the cells are illuminated by epi illumination.

-34